# FASCICULE DE BREVET EUROPEEN

(11) **EP 2 478 524 B1**
(45) Date de publication et mention de la délivrance du brevet: **17.07.2013**
(21) Numéro de dépôt: 10771794.4
(22) Date de dépôt: 15.09.2010
(51) Int. Cl.: G21C 17/112, G21C 19/105

(54) **DISPOSITIF D'AIDE SOUS EAU À L'EXTRACTION OU À L'INSERTION D'UN ÉLÉMENT DE FORME ALLONGÉE DISPOSÉ DANS UN CONDUIT ET PROCÉDÉ D'AIDE À L'EXTRACTION OU À L'INSERTION D'UN TEL ÉLÉMENT**
HILFSVORRICHTUNG FÜR DIE UNTERWASSEREXTRAKTION ODER -EINFÜGUNG EINES LÄNGLICHEN ELEMENTS IN EINEM ROHR UND VERFAHREN ZUR HILFE BEI DER EXTRAKTION ODER EINFÜGUNG EINES DERARTIGEN ELEMENTS
DEVICE FOR ASSISTING IN THE UNDERWATER EXTRACTION OR INSERTION OF AN ELONGATE ELEMENT DISPOSED IN A PIPE, AND METHOD FOR ASSISTING IN THE EXTRACTION OR INSERTION OF ONE SUCH ELEMENT

(30) Priorité: 16.09.2009 FR 0956354
(43) Date de publication de la demande: 25.07.2012
(73) Titulaire: Areva NP, 92400 Courbevoie (FR)
(72) Inventeur: LANGE, Frédéric, F-92320 Chatillon (FR); FLOQUET, Jacques, F-84820 Visan (FR); MURAT, Gérard, F-69005 Lyon (FR)
(74) Mandataire: Blot, Philippe Robert Emile
(86) Numéro de dépôt international: PCT/FR2010/051913
(87) Numéro de publication internationale: WO 2011/033220

(56) Documents cités:
- EP-A1- 0 175 977
- EP-A1- 0 469 962
- FR-A1- 2 688 618

## Description

La présente invention concerne un dispositif d'aide sous eau à l'extraction ou à l'insertion d'un élément de forme allongée disposé dans un conduit et notamment d'un thermocouple disposé dans un conduit de mesure des équipements internes supérieurs d'un réacteur nucléaire à eau sous pression.

L'invention concerne également un procédé d'aide sous eau à l'extraction ou à l'insertion d'un élément de forme allongée disposé dans un conduit.

Les réacteurs nucléaires à eau sous pression comportent, à l'intérieur d'une cuve, le coeur du réacteur nucléaire constitué par des assemblages de combustibles de forme prismatique avec leur axe vertical et, au-dessus du coeur, des équipements internes supérieurs comportant en particulier un ensemble de tubes-guides verticaux permettant d'assurer le guidage des barres de commande constituées par des faisceaux de crayons placés parallèlement les uns aux autres et renfermant un matériau absorbant les neutrons.

Pour assurer la commande des réacteurs par réglage de la réactivité du coeur, les grappes de crayons absorbants sont déplacées dans la direction verticale, pendant le fonctionnement du réacteur, de manière que les crayons absorbants soient introduits sur une hauteur plus ou moins importante à l'intérieur de certains assemblages combustibles du coeur.

Les équipements internes supérieurs comportent, en général, une plaque supérieure également dénommée plaque support et une plaque inférieure constituant la plaque supérieure du coeur du réacteur nucléaire venant en appui sur l'extrémité supérieure des assemblages combustibles, lorsque les équipements internes supérieurs sont en position de service dans le coeur du réacteur. Les tubes-guides verticaux assurant le guidage des tiges de commande sont reliés à la plaque support et à la plaque inférieure qui comportent chacun une première partie intercalée entre la plaque support et la plaque inférieure et une seconde partie fixée au-dessus de cette plaque support. Des colonnes entretoises disposées entre la plaque support et la plaque inférieure, parallèlement aux tubes-guides permettent de maintenir ces plaques et d'assurer la rigidité des équipements internes supérieurs.

Les équipements internes supérieurs comprennent aussi des colonnes d'instrumentation, telles que des colonnes de thermocouples de forme cylindrique. Dans chacune des colonnes de thermocouples, est disposé un ensemble de thermocouples permettant de mesurer la température du fluide de refroidissement à la sortie d'un ensemble présélectionné d'assemblages de combustible du coeur du réacteur.

Le nombre de colonnes de thermocouples est généralement de deux ou de quatre.

Chaque colonne de thermocouples n'est pas fixée sur la plaque support des équipements internes supérieurs, mais est guidée par une fusée s'étendant verticalement au-dessus de cette plaque et qui pénètre dans la colonne de thermocouples. Par contre, chaque colonne de thermocouples est rendue solidaire du couvercle de la cuve du réacteur uniquement par des moyens d'étanchéité supérieurs, disposés entre une tubulure d'un adaptateur fixé dans une ouverture du couvercle et la partie supérieure de la colonne.

Plusieurs thermocouples sont donc disposés dans une colonne et sortent de cette colonne par des ouvertures périphériques, ménagées à la base de la colonne pour rejoindre chacun un piquage de passage au travers de la plaque support. A cet effet, chaque piquage est pourvu d'un tube de guidage disposé dans l'alignement d'un orifice ménagé dans la plaque support sensiblement à l'aplomb d'une zone où la mesure de la température doit être effectuée. Le thermocouple est introduit dans un conduit supérieur de guidage porté par la colonne de thermocouples et par un conduit inférieur de guidage disposé dans le tube du piquage correspondant. L'extrémité sensible de mesure du thermocouple est positionnée au niveau de la zone de mesure prédéterminée.

Une partie des thermocouples est destinée à mesurer la température du fluide de refroidissement du réacteur, à la sortie du coeur, en-dessous de la plaque supérieure du coeur, à proximité de l'embout supérieur des assemblages combustibles.

Les thermocouples introduits dans les conduits sont soumis à des contraintes de température et de pression élevées, si bien que certains d'entre eux peuvent présenter des défauts de fonctionnement après un certain de séjour dans la cuve du réacteur.

Ainsi, il n'est plus possible d'avoir une image fiable et représentative de la température réelle du fluide de refroidissement du coeur du réacteur.

Il est donc nécessaire de remplacer ces thermocouples lors des opérations d'entretien programmées du réacteur nucléaire.

Le remplacement des thermocouples est effectué après arrêt et refroidissement du réacteur et après avoir réalisé le démontage du couvercle.

Préalablement au démontage du couvercle, on désaccouple les connexions des thermocouples et on réalise la séparation des tiges de commande des grappes absorbantes correspondantes. Les équipements internes supérieurs du réacteur sont démontés et mis en place sur une aire de stockage dans la piscine du réacteur.

Pour extraire les thermocouples défectueux, on exerce, depuis le niveau supérieur de la piscine, à distance et sous eau, une traction sur le thermocouple en utilisant un outil en prise avec le prolongement du thermocouple à l'extérieur de la colonne correspondante. Il peut être nécessaire d'exercer une très forte traction sur le thermocouple pour assurer son extraction.

En effet, du fait que le thermocouple soit monté avec un jeu très faible et même pratiquement nul dans certaines parties des conduits, les forces de frottements, lors de l'extraction des thermocouples, peuvent être très importantes.

Dans certains cas, le thermocouple est bloqué dans le conduit et ne peut pas être extrait par traction sans risque de rupture. Dans ce cas, le conduit de mesure est condamné ce qui entraîne la perte d'un point de mesure.

Dans certains conduits longs et avec plusieurs courbes, il est peu probable de pouvoir extraire le thermocouple, le grippage étant suffisant pour créer une situation de blocage.

Dans d'autres cas, malgré une extraction réussie, il peut être difficile, voire impossible d'introduire un nouveau thermocouple dans le conduit.

Enfin, une simple traction sur le thermocouple peut conduire à un endommagement de la paroi du conduit correspondant ce qui est préjudiciable à l'insertion d'un nouveau thermocouple.

Il est connu pour faciliter l'extraction des thermocouples de provoquer la propagation d'ultrasons dans le thermocouple depuis son extrémité sur laquelle on exerce une traction dans sa direction axiale. De tels procédés et dispositifs d'aide a l'extraction d'un thermocouple sont présenté dans le documents EP-A1-0469962 et EP-A1-0175977.

Cependant, dans le cas de thermocouples dont la partie de blocage se situe dans l'extrémité inférieure du conduit, c'est-à-dire à une distance importante de l'extrémité du thermocouple sur laquelle on exerce la traction et par laquelle sont transmis les ultrasons, ce procédé connu manque d'efficacité.

L'invention a pour but de proposer un dispositif et un procédé d'aide à l'extraction ou à l'insertion d'un élément de forme allongée disposé dans un conduit qui permet, par des moyens simples à mettre en oeuvre, d'éviter ces inconvénients et de faciliter l'extraction ou l'insertion de l'élément de forme allongée.

L'invention a donc pour objet un dispositif d'aide sous eau à l'extraction ou à l'insertion d'un élément de forme allongée disposé dans un conduit et notamment d'un thermocouple disposé dans un conduit de mesure des équipements internes supérieurs d'un réacteur nucléaire à eau sous pression, caractérisé en ce qu'il comprend un ensemble de serrage et de mise en vibration comportant, d'une part, un boîtier étanche portant une pince et contenant un organe de serrage de la pince sur le conduit, un vibrateur réglable de mise en vibration du boîtier et de la pince et un organe de mesure de la vibration engendrée par le vibrateur sur le conduit pour déterminer la vibration optimale et, d'autre part, des moyens de commande à distance de la pince et du vibrateur.

Selon d'autres caractéristiques de l'invention :
- la pince comprend un mors fixe et un mors mobile déplaçable par un organe de serrage entre une position rapprochée du mors fixe et une position écartée dudit mors fixe,
- l'organe de serrage est formé par un vérin,
- le vibrateur est un vibrateur pneumatique,
- l'organe de mesure est formé par un accéléromètre, et
- le boîtier est fixé à l'extrémité d'une perche de manutention à distance.

L'invention a également pour objet un procédé d'aide sous eau à l'extraction d'un élément de forme allongée disposé dans un conduit et notamment d'un thermocouple disposé dans un conduit de mesure des équipements internes supérieurs d'un réacteur nucléaire à eau sous pression, au moyen d'un dispositif d'extraction tel que précédemment défini, caractérisé en ce que :
- on descend le boîtier dans l'eau par la perche de manutention,
- on maintient les mors de la pince en position écartée,
- on place les mors de la pince de part et d'autre du conduit de l'élément de forme allongée à extraire,
- on commande à distance l'organe de serrage pour déplacer les mors en position de serrage du conduit,
- on commande le vibrateur pour mettre en vibration le conduit au moyen du boîtier et de la pince,
- on mesure la vibration engendrée par le vibrateur sur le conduit pour déterminer la vibration optimale,
- on règle le vibrateur à la vibration optimale, et
- on exerce simultanément une traction dans la direction axiale sur l'élément de forme allongée.

L'invention a aussi pour objet un procédé d'aide sous eau à l'insertion d'un élément de forme allongée disposé dans un conduit et notamment d'un thermocouple disposé dans un conduit de mesure des équipements internes supérieurs d'un réacteur nucléaire à eau sous pression, au moyen d'un dispositif d'insertion tel que précédemment défini, caractérisé en ce que :
- on descend le boîtier dans l'eau par la perche de manutention,
- on maintient les mors de la pince en position écartée,
- on place les mors de la pince de part et d'autre du conduit de l'élément de forme allongée à insérer,
- on commande à distance l'organe de serrage pour déplacer les mors en position de serrage du conduit,
- on commande le vibrateur pour mettre en vibration le conduit au moyen de la pince,
- on mesure la vibration engendrée par le vibrateur sur le conduit pour déterminer la vibration optimale,
- on règle le vibrateur à la vibration optimale, et
- on exerce simultanément une poussée dans la direction axiale sur l'élément de forme allongée.

L'invention sera mieux comprise à la lecture de la description qui va suivre, donnée à titre d'exemple et faite en référence aux dessins annexés, sur lesquels :
- la Fig. 1 est une vue schématique en coupe par un plan de symétrie verticale d'une cuve d'un réacteur nucléaire à eau sous pression,
- la Fig. 2 est une vue schématique en perspective et partielle des équipements internes supérieurs d'un réacteur nucléaire en position sur un stand d'intervention dans la piscine du réacteur, pour une opération de remplacement d'au moins un thermocouple au moyen du dispositif d'aide, conforme à l'invention,
- la Fig. 3 est une vue schématique de côté d'un ensemble de serrage et de mise en vibration du dispositif d'aide, conforme à l'invention,
- la Fig. 4 est une vue schématique en perspective de l'ensemble de serrage et de mise en vibration du dispositif d'aide, conforme à l'invention, et
- la Fig. 5 est une vue schématique en perspective d'une variante de l'ensemble de serrage et de mise en vibration du dispositif d'aide conforme à l'invention.

Dans la description qui suit, le dispositif selon l'invention sera décrit pour l'aide à l'extraction ou à l'insertion d'un élément de forme allongée constitué par un thermocouple disposé dans un conduit de mesure des équipements internes supérieurs d'un réacteur nucléaire à eau sous pression.

Ce dispositif peut être utilisé pour l'aide à l'extraction ou à l'insertion de tout autre élément de forme allongée dans un conduit.

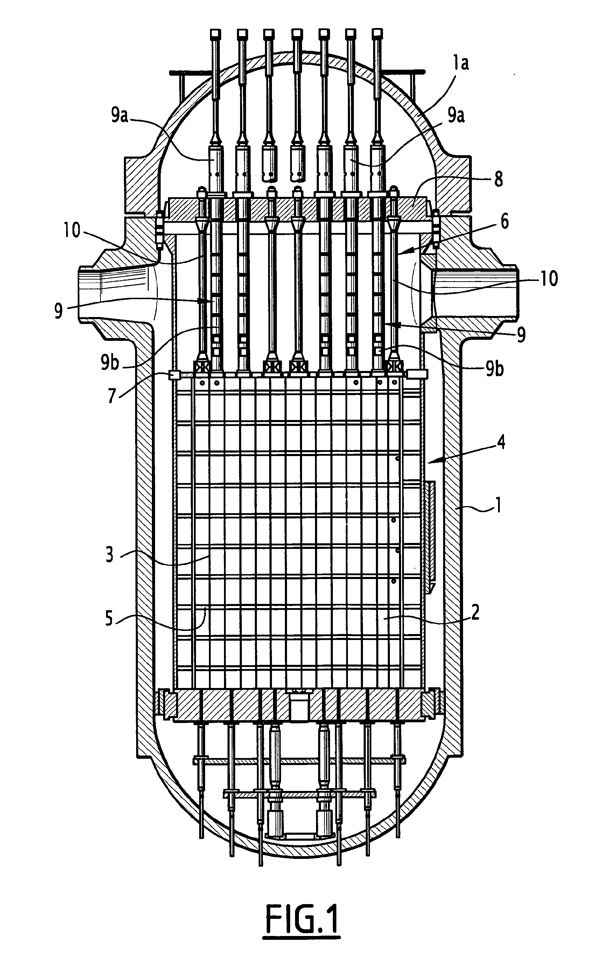

Sur la Fig. 1, on a représenté schématiquement une cuve d'un réacteur nucléaire à eau sous pression désignée par le repère 1. De manière classique, à l'intérieur de la cuve 1 du réacteur nucléaire est disposé le coeur 2 constitué par des assemblages de combustibles 3 juxtaposés de telle sorte que l'axe longitudinal des assemblages de combustibles soit vertical. Le coeur 2 du réacteur est disposé à l'intérieur des équipements internes inférieurs désignés par la référence générale 4 et qui comporte en particulier le cloisonnement 5 du coeur.

Le réacteur nucléaire comprend également des équipements internes supérieurs désignés par la référence générale 6 qui repose sur la plaque supérieure des assemblages du coeur, par l'intermédiaire d'une plaque supérieure de coeur 7.

Comme il est visible sur la Fig. 1, les équipements internes supérieurs 6 comportent une plaque support 8 des tubes-guides qui sera dénommée par la suite plaque support 8. Cette plaque support 8 s'étend parallèlement à la plaque supérieure de coeur 7 constituant la partie inférieure des équipements internes supérieurs 6 et qui est réalisée de manière à assurer la fixation des équipements internes supérieurs 6 à l'intérieur de la cuve 1.

Les équipements internes supérieurs 6 comportent des tubes-guides désignés par la référence générale 9 qui se composent, chacun au-dessus de la plaque support 8, d'une partie supérieure 9a à section circulaire et, entre la plaque support 8 des équipements internes supérieurs 6 et la plaque supérieure de coeur 7, d'une partie inférieure 9b généralement à section sensiblement carrée à angles arrondis. Chacune des parties 9a et 9b constitue un tube-guide 9 des équipements internes supérieurs 6 permettant le déplacement dans la direction verticale d'une grappe de réglage de la réactivité dans le coeur du réacteur nucléaire, reliée à une tige de suspension et de déplacement, dont le déplacement dans la direction vertical est assuré par un mécanisme, non représenté, situé au-dessus du couvercle 1 a de la cuve 1.

Entre la plaque support 8 des équipements internes supérieurs 6 et la plaque supérieure de coeur 7, sont placées en plus des parties inférieures 9b des tubes-guides 9, des colonnes entretoises 10 assurant le maintien et l'écartement de la plaque supérieure de coeur 7 par rapport à la plaque support 8.

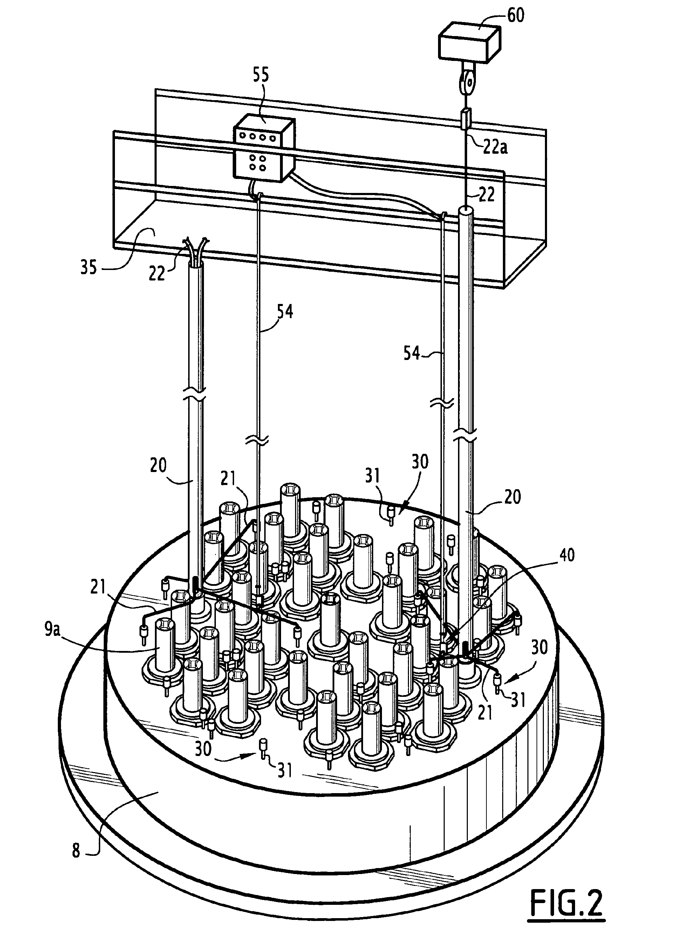

Sur la Fig. 2, on a représenté schématiquement et en perspective, la face supérieure de la plaque support 8 qui porte les parties supérieures 9a des tubes-guides 9 et dans l'exemple de réalisation représenté sur cette figure, deux colonnes de thermocouple 20 qui s'étendent parallèlement aux tubes-guides 9, au-dessus de la plaque support 8. De manière classique, dans chacune des colonnes des thermocouples 20 est disposé un ensemble de conduits supérieurs 21 de guidage chacun d'un thermocouple 22 permettant de mesurer la température du fluide de refroidissement à la sortie d'un ensemble d'assemblage présélectionné du coeur du réacteur nucléaire.

Ainsi que montré à la Fig. 2, plusieurs conduits supérieurs 21 de guidage sont disposés dans une colonne 20 et sortent de cette colonne par des ouvertures périphériques ménagées au-dessus du pied de la colonne de thermocouple 20 pour rejoindre chacun un piquage désigné par la référence générale 30 et destiné au passage au travers la plaque support 8 d'un thermocouple 22.

Sur cette figure, un nombre limité du conduit supérieur 21 a été représenté afin de ne pas surcharger la figure.

Après un certain temps de fonctionnement du réacteur nucléaire, on effectue un arrêt et un refroidissement du réacteur pour entretien et rechargement en assemblages combustibles.

Pour effectuer les opérations d'entretien et de réparation de ces équipements internes de la cuve du réacteur, le couvercle est enlevé après refroidissement du réacteur et les équipements internes supérieurs 6 peuvent être enlevés du réacteur et disposés sur une aire de stockage dans la piscine du réacteur. Dans le cas où un ou plusieurs thermocouples 22 utilisés pour mesurer la température du fluide de refroidissement à la sortie du coeur sont devenus défectueux en service, il est nécessaire d'effectuer leur remplacement. Cette opération de remplacement des thermocouples est effectuée sur les équipements internes supérieurs disposés sur leur aire de stockage et nécessite de réaliser dans un premier temps, l'extraction du thermocouple défectueux 22 de ce conduit 21 et l'insertion d'un nouveau thermocouple 22 dans ce conduit 21.

L'extraction ou l'insertion d'un thermocouple 22 dans le conduit 21 correspondant est facilité par le dispositif d'aide, conforme à l'invention, et qui comprend un ensemble de serrage et de mise en vibration du conduit 21 correspondant, cet ensemble étant désigné par la référence générale 40 sur les figures 2 à 5.

Comme montré à la Fig. 2, pour placer l'ensemble de serrage et de mise en vibration sur le conduit 21 du thermocouple 22 à extraire ou à insérer, les opérateurs interviennent à partir d'une passerelle 35 placée au-dessus du niveau supérieur de l'eau de la piscine dans laquelle les équipements internes supérieurs sont disposés.

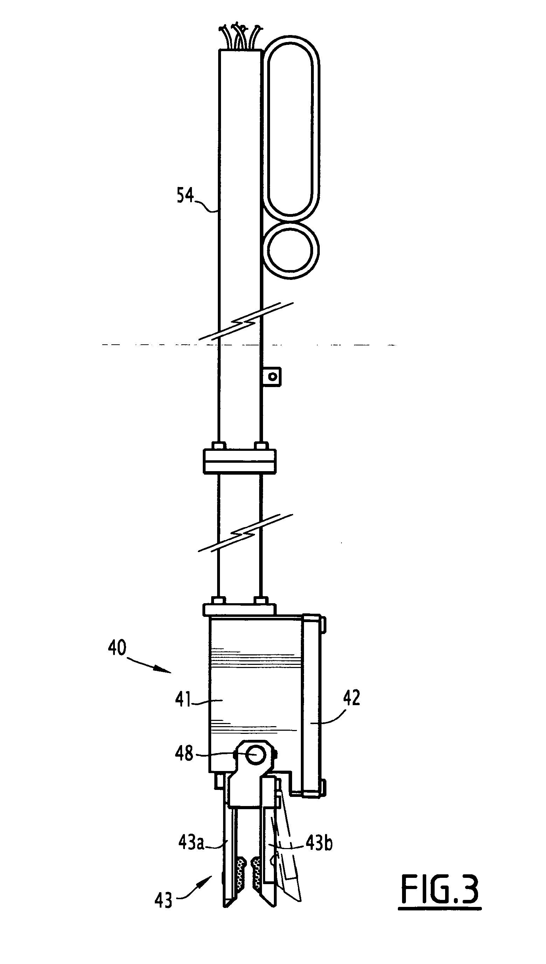

Ainsi que représenté plus particulièrement sur les Figs. 3 à 5, l'ensemble 40 comprend un boîtier étanche 41 équipé, sur l'une de ses faces, d'un couvercle amovible 42. Le boîtier 41 est monté à l'extrémité d'une perche 54 permettant ainsi aux opérateurs d'agir à partir de la passerelle 35 et d'amener le boîtier 41 à proximité du conduit 21 du thermocouple 22 à extraire ou à insérer.

Le boîtier étanche 41 porte une pince 43 formée de deux mors, respectivement 43a et 43b, s'étendant, en position de serrage, sensiblement parallèlement l'un par rapport à l'autre. Ces mors 43a et 43b portent chacun, sur la face destinée à être en contact avec le conduit 21, un patin par exemple en matière plastique.

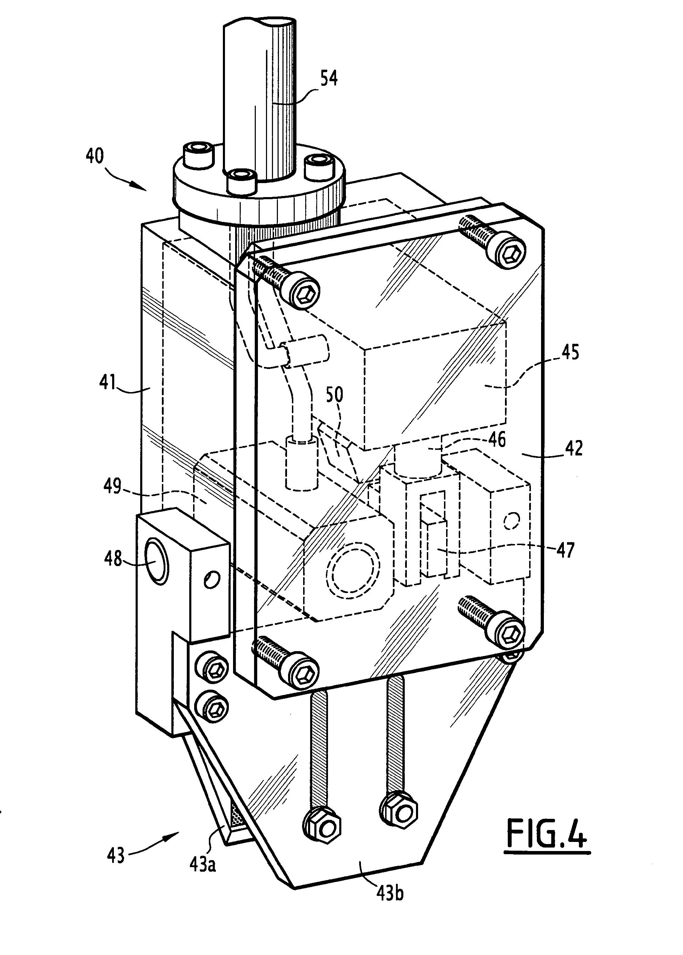

Dans l'exemple de réalisation représenté sur les Figs. 3 à 5, le mors 43a est fixe et le mors 43b est mobile. Le mors mobile 43b est déplaçable par un organe de serrage 45 disposé à l'intérieur du boîtier 41 (Fig. 4) entre une position rapprochée du mors fixe 43a pour serrer le conduit 21 et une position écartée dudit mors fixe 43a représentée en pointillés sur la Fig. 3 de façon à permettre le positionnement de la pince 43 sur le conduit 21 ou le retrait de cette pince 43.

L'organe de serrage 45 est de préférence constitué par un vérin. Ce vérin 45 par exemple pneumatique comporte, de manière classique, un piston 46 qui agit sur une chape 47 de manoeuvre du mors mobile 43b. Pour cela, la chape 47 est reliée à un axe transversal 48 qui porte le mors mobile 43b.

Le mors mobile 43b est maintenu en position écartée du mors fixe 43 par exemple par un ressort, non représenté, ou par tout autre organe approprié.

Le boîtier 41 de l'ensemble 40 contient également un vibrateur réglable 49 par exemple pneumatique et de type connu qui permet de mettre en vibration ce boîtier 41 et la pince 43 portée par ledit boîtier 41.

Enfin, le boîtier 41 contient un organe de mesure 50 de la vibration engendrée par le vibrateur 49 sur le conduit 21 pour déterminer la vibration optimale pour le conduit 21 afin de permettre l'extraction ou l'insertion du thermocouple 22 dans ce conduit 21. Cet organe de mesure 50 est constitué par un accéléromètre ou par tout autre élément approprié.

Le vérin 45, le vibrateur 49 et l'accéléromètre 50 sont reliés par des liaisons électriques et pneumatiques à une armoire de commande et de contrôle 55 montée sur la passerelle 35. Ces éléments de liaison électriques et pneumatiques passent à l'intérieur de la perche de manutention 54. Cette perche de manutention 54 est formée de plusieurs éléments montés à la suite les uns des autres pour constituer une perche étanche.

Dans le cas d'une extraction d'un thermocouple 22 défectueux, l'extrémité libre 22a de ce thermocouple 22 en saillie par rapport à la colonne 20 est reliée, ainsi que montré à la Fig. 2, à des moyens 60 de traction de ce thermocouple 22 constitué par exemple par un palan.

Dans le cas d'une insertion d'un nouveau thermocouple 22 dans le conduit 21 correspondant, l'extrémité libre 22a en saillie par rapport à la colonne 20 est reliée à des moyens de poussée sur ce thermocouple 22.

Pour effectuer une extraction d'un thermocouple 22 coincé dans son conduit 21, les opérateurs placés sur la passerelle 35 procèdent de la manière suivante.

Tout d'abord, les opérateurs relient l'extrémité libre 22a du thermocouple 22 à extraire au palan 60, ainsi que montré à la Fig. 2.

Ensuite, les opérateurs descendent le boîtier 41 de l'ensemble 40 dans l'eau de la piscine au moyen de la perche de manutention 54. Les mors 43a et 43b de la pince 43 sont maintenus en position écartée permettant ainsi aux opérateurs de placer le conduit 21 du thermocouple 22 à extraire entre ces mors, respectivement 43a et 43b. Les opérateurs peuvent s'aider d'un moyen de vision, comme par exemple une caméra sous-marine placée au bout d'une perche de manutention.

A l'aide de l'armoire de commande 55, les opérateurs commandent à distance le vérin 45 de façon à déplacer le mors mobile 43b et amener la pince 43 en position de serrage par l'intermédiaire du piston 46 du vérin 45 qui agit sur la chape 47 de façon à faire pivoter le mors mobile 43b autour de l'axe transversal 48. Après serrage de la pince 43 sur le conduit 21 du thermocouple 22 à extraire, les opérateurs actionnent le vibrateurs 49 pour faire vibrer le conduit 21 par l'intermédiaire du boîtier 41 et de la pince 43. L'accéléromètre 50 mesure la vibration engendrée par le vibrateur 49 sur le conduit 21 et la valeur ainsi mesurée est affichée sur le boîtier de commande 55 permettant ainsi de déterminer la vibration optimale engendrée dans le conduit 21. Les opérateurs règlent le vibrateur 49 à la vibration optimale.

Simultanément, le palan 60 exerce une traction dans la direction axiale sur le thermocouple 22 afin de l'extraire de son conduit 21.

Les vibrations ainsi créées dans le conduit 21 du thermocouple 22 à extraire pendant la phase de traction permettent de créer des micros-décollements entre le thermocouple et le conduit et d'engendrer une réduction du coefficient de frottement entre ledit thermocouple et ledit conduit. Ainsi, l'endommagement potentiel du conduit est réduit et les chances de réussir l'extraction du thermocouple sont augmentées.

Selon une variante, plusieurs ensembles 40 peuvent être placés sur un même conduit.

Selon une autre variante, des vibrations peuvent également être engendrées dans le thermocouple lui-même. Dans ce cas, un vibrateur, non représenté, est monté en série avec le moyen de traction c'est à dire avec le palan 60.

Pour l'introduction d'un thermocouple 22 neuf dans un conduit 21 après l'extraction d'un thermocouple défectueux, les opérateurs procèdent de manière identique, mais au lieu d'exercer une traction sur le thermocouple, ils exercent au moyen d'un système approprié, une poussée sur le thermocouple à introduire dans le conduit.

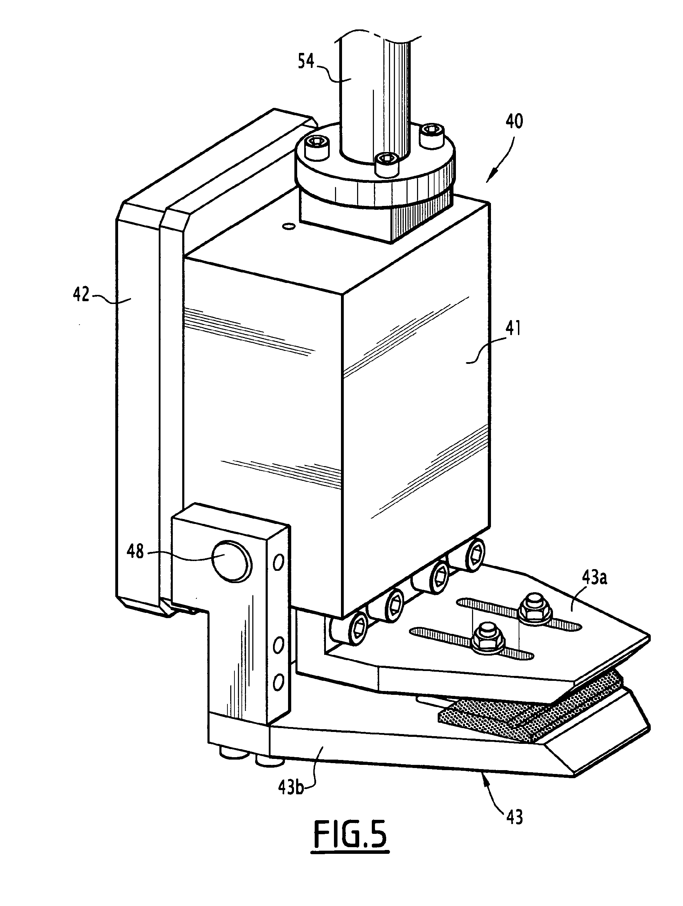

Selon un autre mode de réalisation représenté à la Fig. 5, les mors 43a et 43b de la pince 43 sont disposés horizontalement alors que dans le mode de réalisation précédemment décrit, ces mors sont disposés verticalement.

## Revendications

1. Dispositif d'aide sous eau à l'extraction ou à l'insertion d'un élément de forme allongée (22) disposé dans un conduit (21) et notamment d'un thermocouple disposé dans un conduit de mesure des équipements internes supérieurs d'un réacteur nucléaire à eau sous pression, **caractérisé en ce qu'**il comprend un ensemble (40) de serrage et de mise en vibration comportant, d'une part, un boîtier étanche (41, 42) portant une pince (43) et contenant un organe de serrage (45, 46) de la pince (43) sur le conduit (21), un vibrateur (49) réglable de mise en vibration du boîtier (41, 42) et de la pince (43) et un organe de mesure (50) de la vibration engendrée par le vibrateur (50) sur le conduit (21) pour déterminer la vibration optimale et, d'autre part, des moyens (55) de commande à distance de la pince (43) et du vibrateur (49).

2. Dispositif selon la revendication 1, **caractérisé en ce que** la pince (43) comporte un mors fixe (43a) et un mors mobile (43b) déplaçable par l'organe de serrage (45, 46) entre une position rapprochée du mors fixe (43a) et une position écartée dudit mors fixe (43a).

3. Dispositif selon la revendication 1 ou 2, **caractérisé en ce que** l'organe de serrage (45, 46) est formé par un vérin.

4. Dispositif selon l'une quelconque des revendications 1 à 3, **caractérisé en ce que** le vibrateur (49) est un vibrateur pneumatique.

5. Dispositif selon l'une quelconque des revendications 1 à 4, **caractérisé en ce que** l'organe de mesure (50) est formé par un accéléromètre.

6. Dispositif selon l'une quelconque des revendications 1 à 5, **caractérisé en ce que** le boîtier (41, 42) est fixé à l'extrémité d'une perche de manutention (54) à distance.

7. Procédé d'aide sous eau à l'extraction d'un élément de forme allongée (22) disposé dans un conduit (21) et notamment d'un thermocouple disposé dans un conduit de mesure des équipements internes supérieurs d'un réacteur nucléaire à eau sous pression, au moyen d'un dispositif d'extraction selon l'une quelconque des revendications 1 à 6, **caractérisé en ce que** :
- on descend le boîtier (41, 42) dans l'eau par la perche de manutention (54),
- on maintient les mors (43a, 43b) de la pince (43) en position écartée,
- on place le mors (43a, 43b) de la pince (43) de part et d'autres du conduit (21) de l'élément de forme allongée (22),
- on commande à distance l'organe de serrage (45,46) pour déplacer les mors (43a) et (43b) en position de serrage du conduit (21),
- on commande le vibrateur (49) et on met en vibration le conduit (21) au moyen de la pince (43),
- on mesure la vibration engendrée par le vibrateur (49) sur le conduit (21) pour déterminer la vibration optimale,
- on règle le vibrateur (49) à la vibration optimale, et
- on exerce simultanément une traction dans la direction axiale sur l'élément de forme allongée (22).

8. Procédé selon la revendication 7, **caractérisé en ce que** simultanément à la mise en vibration du conduit (21), on met en vibration l'élément de forme allongée (22) et on exerce la traction sur ledit élément de forme allongée (22).

9. Procédé d'aide sous eau à l'insertion d'un élément de forme allongée (22) disposé dans un conduit (21) et notamment d'un thermocouple disposé dans un conduit de mesure des équipements internes supérieurs d'un réacteur nucléaire à eau sous pression, au moyen d'un dispositif d'insertion selon l'une quelconque des revendications 1 à 6, **caractérisé en ce que** :
- on descend le boîtier (41, 42) dans l'eau par la perche de manutention (54),
- on maintient les mors (43a, 43b) de la pince (43) en position écartée,
- on place les mors (43a, 43b) de la pince (43) de part et d'autre du conduit (21) de l'élément de forme allongée (22),
- on commande à distance l'organe de serrage (45, 46) pour déplacer les mors (43a, 43b) de la pince (43) en position de serrage du conduit (21),
- on commande le vibrateur (49) pour mettre en vibration le conduit (21) au moyen de la pince (43),
- on mesure la vibration engendrée par le vibrateur (49) sur le conduit (21) pour déterminer la vibration optimale,
- on règle le vibrateur à la vibration optimale, et
- on exerce simultanément une poussée dans la direction axiale sur l'élément de forme allongée (22).

10. Procédé selon la revendication 9, **caractérisé en ce que** simultanément à la mise en vibration du conduit (21), on met en vibration l'élément de forme allongée (22) et on exerce la poussée sur ledit élément de forme allongée (22).

## Patentansprüche

1. Hilfsvorrichtung für die Unterwasserextraktion- oder -einfügung eines länglichen Elements (22), das in einem Rohr (21) angeordnet ist, und insbesondere eines Thermoelements, das in einem Messrohr der oberen internen Ausrüstungen eines Druckwasser-Kernreaktors angeordnet ist, **dadurch gekennzeichnet, dass** sie eine Spann - und Vibrationseinheit (40) umfasst, die einerseits ein dichtes Gehäuse (41, 42), das eine Zange (43) trägt und ein Spannorgan (45, 46) der Zange (43) auf dem Rohr (21), einen einstellbaren Vibrator (49), der das Gehäuse (41, 42) und die Zange (43) in Vibration versetzt und ein Messorgan (50) der von dem Vibrator (50) auf dem Rohr (21) erzeugten Vibration, um die optimale Vibration zu bestimmen, enthält, und andererseits Fernsteuermittel (55) der Zange (43) und des Vibrators (49) aufweist.

2. Vorrichtung nach Anspruch 1, **dadurch gekennzeichnet, dass** die Zange (43) eine starre Backe (43a) und eine bewegliche Backe (43b) aufweist, die durch das Spannorgan (45, 46) zwischen einer gegenüber der starren Backe (43a) angenäherten Position und einer gegenüber der starren Backe (43a) entfernten Position verlagerbar ist.

3. Vorrichtung nach Anspruch 1 oder 2, **dadurch gekennzeichnet, dass** das Spannorgan (45, 46) von einem Heber gebildet wird.

4. Vorrichtung nach einem der Ansprüche 1 bis 3, **dadurch gekennzeichnet, dass** der Vibrator (49) ein pneumatischer Vibrator ist.

5. Vorrichtung nach einem der Ansprüche 1 bis 4, **dadurch gekennzeichnet, dass** das Messorgan (50) von einem Beschleunigungsmesser gebildet wird.

6. Vorrichtung nach einem der Ansprüche 1 bis 5, **dadurch gekennzeichnet, dass** das Gehäuse (41, 42) am Ende einer Fernbedienungs-Handhabungsstange (54) befestigt ist.

7. Hilfsverfahren für die Unterwasserextraktion eines länglichen Elements (22), das in einem Rohr (21) angeordnet ist, und insbesondere eines Thermoelements, das in einem Messrohr der oberen internen Ausrüstungen eines Druckwasser-Kernreaktors angeordnet ist, mittels einer Extraktionsvorrichtung nach einem der Ansprüche 1 bis 6, **dadurch gekennzeichnet, dass**:
- das Gehäuse (41, 42) mit der Handhabungsstange (54) ins Wasser abgesenkt wird,
- die Backen (43a, 43b) der Zange (43) in entfernter Position gehalten werden,
- die Backe (43a, 43b) der Zange (43) auf der einen und der anderen Seite des Rohrs (21) des länglichen Elements (22) platziert wird,
- das Spannorgan (45, 46) ferngesteuert wird, um die Backen (43a) und (43b) in Spannposition des Rohrs (21) zu verlagern,
- der Vibrator (49) gesteuert wird und das Rohr (21) mittels der Zange (43) in Vibration versetzt wird,
- die von dem Vibrator (49) auf dem Rohr (21) erzeugte Vibration gemessen wird, um die optimale Vibration zu bestimmen,
- der Vibrator (49) auf die optimale Vibration eingestellt wird, und
- gleichzeitig ein Zug auf das längliche Element (22) in die axiale Richtung ausgeübt wird.

8. Verfahren nach Anspruch 7, **dadurch gekennzeichnet, dass** das längliche Element (22) gleichzeitig mit der Invibrationversetzung des Rohrs (21) in Vibration versetzt wird, und dass der Zug auf das längliche Element (22) ausgeübt wird.

9. Hilfsverfahren für die Unterwassereinfügung eines länglichen Elements (22), das in einem Rohr (21) angeordnet ist, und insbesondere eines Thermoelements, das in einem Messrohr der oberen internen Ausrüstungen eines Druckwasser-Kernreaktors angeordnet ist, mittels einer Einfügevorrichtung nach einem der Ansprüche 1 bis 6, **dadurch gekennzeichnet, dass**:
- das Gehäuse (41, 42) mit der Handhabungsstange (54) ins Wasser abgesenkt wird,
- die Backen (43a, 43b) der Zange (43) in entfernter Position gehalten werden,
- die Backen (43a, 43b) der Zange (43) auf der einen und der anderen Seite des Rohrs (21) des länglichen Elements (22) platziert werden,
- das Spannorgan (45, 46) ferngesteuert wird, um die Backen (43a, 43b) der Zange (43) in Spannposition des Rohrs (21) zu verlagern,
- der Vibrator (49) gesteuert wird, um das Rohr (21) mittels der Zange (43) in Vibration zu versetzen,
- die von dem Vibrator (49) auf dem Rohr (21) erzeugte Vibration gemessen wird, um die optimale Vibration zu bestimmen,
- der Vibrator auf die optimale Vibration eingestellt wird, und
- gleichzeitig auf das längliche Element (22) ein Schub in die axiale Richtung ausgeübt wird.

10. Verfahren nach Anspruch 9, **dadurch gekennzeichnet, dass** das längliche Element (22) gleichzeitig mit der Invibrationversetzung des Rohrs (21) in Vibration versetzt wird, und dass auf das längliche Element (22) der Schub ausgeübt wird.

## Claims

1. A device for assisting in the underwater extraction or insertion of an elongate element (22) disposed in a pipe (21) and in particular a thermocouple disposed in a measuring pipe of the upper internal equipment of a pressurized water nuclear reactor, **characterized in that** it includes a clamping and vibration-generating assembly (40) comprising, on the one hand, a sealed housing (41, 42) bearing a gripper (43) and including a member (45, 46) for tightening the gripper (43) on the pipe (21), an adjustable vibrator (49) for vibrating the housing (41, 42) and the gripper (43), and a member (50) for measuring the vibration produced by the vibrator (50) on the pipe (21) in order to determine the optimum vibration and, on the other hand, means (55) for remotely controlling the gripper (43) and the vibrator (49).

2. The device according to claim 1, **characterized in that** the gripper (43) comprises a stationary jaw (43a) and a movable jaw (43b) that can be moved by a clamping member (45, 46) between a position close to the stationary jaw (43a) and a position spaced away from said stationary jaw (43a).

3. The device according to claim 1 or 2, **characterized in that** the clamping member (45, 46) is formed by a cylinder.

4. The device according to any one of claims 1 to 3, **characterized in that** the vibrator (49) is a pneumatic vibrator.

5. The device according to any one of claims 1 to 4, **characterized in that** the measuring member (50) is formed by an accelerometer.

6. The device according to any one of claims 1 to 5, **characterized in that** the housing (41, 42) is fastened at the end of a remote handling pole (54).

7. A method for assisting in the underwater extraction of an elongate element (22) disposed in a pipe (21) and in particular a thermocouple disposed in a measuring pipe of the upper internal equipment of a pressurized water nuclear reactor, using an extraction device according to any one of claims 1 to 6, **characterized in that**:
- the housing (41, 42) is lowered into the water using the handling pole (54),
- the jaws (43a, 43b) of the gripper (43) are kept in the spaced-apart position,
- the jaws (43a, 43b) of the gripper (43) are placed on either side of the pipe (21) of the elongate element (22),
- the clamping member (45, 46) is controlled remotely to move the jaws (43a, 43b) in the clamping position of the pipe (21),
- the vibrator (49) is commanded to vibrate the pipe (21) using the gripper (43),
- the vibration created by the vibrator (49) on the pipe (21) is measured to determine the optimum vibration,
- the vibrator (49) is adjusted to the optimum vibration, and
- pulling is simultaneously exerted in the axial direction on the elongate element (22).

8. The method according to claim 7, **characterized in that** at the same time as the vibration of the pipe (21), the elongate element (22) is vibrated and a pulling force is exerted on said elongate element (22).

9. A method for assisting in the underwater insertion of an elongate element (22) disposed in a pipe (21) and in particular a thermocouple disposed in a measuring pipe of the upper internal equipment of a pressurized water nuclear reactor, using an insertion device according to any one of claims 1 to 6, **characterized in that**:
- the housing (41, 42) is lowered into the water using the handling pole (54),
- the jaws (43a, 43b) of the gripper (43) are kept in the spaced-apart position,
- the jaws (43a, 43b) of the gripper (43) are placed on either side of the pipe (21) of the elongate element (22) to be inserted,
- the clamping member (45, 46) is controlled remotely to move the jaws (43a, 43b) of the gripper (43) in the clamping position of the pipe (21),
- the vibrator (49) is commanded to vibrate the pipe (21) using the gripper (43),
- the vibration created by the vibrator (49) on the pipe (21) is measured to determine the optimum vibration,
- the vibrator is adjusted to the optimum vibration, and
- thrust is simultaneously exerted in the axial direction on the elongate element (22).

10. The method according to claim 9, **characterized in that** at the same time as the vibration of the pipe (21 }, the elongate element (22) is vibrated and a thrust force is exerted on said elongate element (22).
